# EUROPÄISCHE PATENTSCHRIFT

(11) **EP 2 256 671 B1**
(45) Veröffentlichungstag und Bekanntmachung des Hinweises auf die Patenterteilung: **22.08.2012**
(21) Anmeldenummer: 10004439.5
(22) Anmeldetag: 27.04.2010
(51) Int. Cl.: G06K 19/073

(54) **Schutzhülle für einen Datenträger mit Transpondereinheit und Verfahren zu deren Herstellung**
Protective casing for a data carrier with transponder unit and method for its manufacture
Enveloppe de protection pour un support de données doté d'une unité de transpondeur et son procédé de fabrication

(30) Priorität: 18.05.2009 DE 102009021694
(43) Veröffentlichungstag der Anmeldung: 01.12.2010
(73) Patentinhaber: Winter AG, 85716 Unterschleissheim (DE)
(72) Erfinder: Bernard, Walter, 6384 Waidring/Tirol (AT)
(74) Vertreter: Samson & Partner

(56) Entgegenhaltungen:
- WO-A2-2008/008203
- US-A1- 2006 254 815
- US-A1- 2006 290 501

## Beschreibung

### Gebiet der Erfindung

Die Erfindung betrifft eine Schutzhülle für einen Datenträger, der eine Transpondereinheit enthält, z.B. eine Chipkarte oder dergleichen, die für eine kontaktlose Datenübertragung eingerichtet ist, sowie Verfahren zur Herstellung einer derartigen Schutzhülle.

### Hintergrund der Erfindung

Ein Auto, das seinen Besitzer erkennt, Einkaufen, ohne an der Kasse nach dem Geldbeutel suchen zu müssen, oder ein Ortungsgerät, das einem die Suche nach dem Hausschlüssel abnimmt - dank moderner RFID-Funktechnik wäre all das kein Problem, hätten Verbraucher nicht grundsätzliche Zweifel an einem System, das persönliche Daten von allein und unkontrollierbar an ein Computersystem weitergibt. Datenträger der eingangs genannten Art, z.B. in Form von Chipkarten, die mit einem RFID-Chip bzw. einem RFID-Transponder ausgestattet sind, werden derzeit bereits in verschiedenen Ausgestaltungen verwendet oder sind zumindest dafür angedacht, z.B. als Geldkarten, Kreditkarten, Personalausweis, Reisepass mit einer sog. Datapage mit RFID-Chip, Gesundheitskarten, Skipass, Eintrittskarten, etc.. Die Abkürzung "RFID" steht dabei für "Radio Frequency Identification" und ein RFID-System umfasst im wesentlichen eine Transpondereinheit, die sich auf einem Gerät, in Kleidungsstücken oder auf einer Chipkarte befinden kann, und ein Lesegerät das Daten von der Transpondereinheit berührungslos auslesen kann. Verbraucher befürchten nun, dass ihr Verhalten von anderen überwacht und missbraucht werden könnte. Dazu ist nicht einmal notwendig, dass ein Hersteller oder eine Ausgabestelle, die bereits über persönliche Daten verfügen, diese missbrauchen oder weitergeben. Es genügt, wenn bei einem Vorgang, der eine Person eindeutig identifiziert, eine Transpondereinheit ausgelesen wird, die sich persönlich zuordnen lässt.

Beispielsweise könnte ein Einzelhandelsunternehmen seine Kassensysteme so ausrüsten, dass immer wenn ein Kunde mit Kreditkarte bezahlt, der Kunde nach einer persönlichen Transponderkennung abgetastet wird. Sollte er eine solche Kennung mit sich führen, beispielsweise in Form einer persönlichen Zugangskarte, kann er bei seinem nächsten Besuch in einer der Filialen des Einzelhandelunternehmens ohne sein Wissen beobachtet werden und sein Verhalten kann auch über längere Zeiträume im Rahmen eines Kundenprofils charakterisiert und interpretiert werden. Solche Daten können nicht nur im Einzelhandelsunternehmen verwendet werden, die jüngere Vergangenheit zeigt, dass solche Daten auch für andere Unternehmen interessant sein können und zu entsprechenden Preisen, aber nach wie vor ohne Kenntnis oder gar Einverständnis des Kunden, gehandelt werden können.

Sollten Transponder in Zukunft auch in bargeldlosen Zahlungsmitteln, wie Kredit- oder Debitkarten, integriert sein, sind kriminellem Missbrauch, der eventuell erst bei einem Blick auf einen Kontoausdruck auffällt, kaum Grenzen gesetzt.

Sicherheitsexperten warnen zudem, dass Terroristen eine Bombe mit intelligentem Zünder bauen könnten, die genau dann explodiert, wenn eine bestimmte Person, die durch einen RFID-Chip identifiziert werden kann, in ihrer Nähe ist.

Im Dokument WO 2008/144336 ist zum Schutz vor solchem Missbrauch derartiger Datenträger ein elektromagnetisches Schirmmaterial für einen Umschlag oder als Bestandteil eines Geldbeutels offenbart. Das Schirmmaterial umfasst wenigstens eine Lage Papier und eine leitfähige Schicht. Die leitfähige Schicht soll ein Auslesen eines RFID-Chips verhindern, wenn sie zwischen den RFID-Chip und eine Antenne gehalten wird. Wenn ein Anwender seine persönlichen Chipkarten in einem Behältnis aufbewahrt, das mit einem solchen Schirmmaterial ausgestattet ist, können enthaltene RFID-Chips nicht ausgelesen werden.

Die vorstehend beschriebene Maßnahme ist allerdings nicht besonders geeignet, Datenträger der beschriebenen Art auch während des Postversandes von dem Aussteller bzw. Vermittler bis zum Empfang durch einen Kunden vor unberechtigten Auslesen zu schützen. Die Datenträger erreichen Kunden üblicherweise mit der Briefpost. Gerade Chipkarten mit Transpondereinheit sind beim Versand mit der Post besonders gefährdet. Ihren Briefumschlägen ist nicht nur nicht anzusehen, ob der enthaltene Datenträger ausgelesen wurde, auf einem Briefumschlag sind auch Name und Adresse des Empfängers und nicht selten des Absenders vermerkt, so dass die Transpondereinheit bereits vor Zustellung des Briefs mit einem Anwender in Verbindung gebracht werden kann, ohne dass dieser etwas davon mitbekommen kann. Solche Daten ließen sich mit geringem Aufwand und auch ohne Wissen des Postdienstleisters in großen Mengen erfassen. Grundsätzlich wäre es zwar möglich, jede Chipkarte vor dem Versand in eine Schutzhülle einzufügen. Die Chipkarte würde sich mit der Schutzhülle im Briefumschlag aber unter Umständen von außen sichtbar abzeichnen. Zudem ist das Einfügen und Versenden nur mit erheblichem Aufwand automatisierbar.

US 2006/290501 A1 offenbart Schutzflächen zum Schutz eines kontaktlos auslesbaren Datenträgers, die in einem Briefbogen, einem Briefumschlag oder einer Brieftasche angeordnet sein können. Dazu wird der Datenträger in der Brieftasche oder dem Briefumschlag angeordnet bzw. der Briefbogen wird zum Versand um den Datenträger gefaltet. Die Schutzflächen sollen geeignet sein, ein Signal zum Auslesen des Datenträgers so abzuschwächen, dass der Datenträger nicht ausgelesen werden kann, wenn er von den Schutzflächen umgeben ist.

US 2006/254815 A1 beschreibt elektrisch leitfähige Folien, die einen Briefumschlag bilden, in den ein Dokument eingefügt werden kann, auf dem ein kontaktlos auslesbarer Datenträger angebracht ist. In einem anderen Ausführungsbeispiel ist ein Dokument, auf dem ein kontaktlos auslesbarer Datenträger angebracht ist, auf der Vorder- und Rückseite ganzflächig oder im Bereich des Datenträgers mit elektrisch leitfähigen Folien beklebt.

WO 2008/008203 beschreibt eine Schutzhülle zur Abschirmung kontaktloser Karten, welche aus abschirmendem Papier gefaltet wird.

Diesen Problemen möchte die Erfindung Abhilfe verschaffen.

### Kurzfassung der Erfindung

Zur Abhilfe stellt die vorliegende Erfindung einen Briefbogen und einen Briefumschlag gemäß den unabhängigen Ansprüchen 1 und 6 sowie eine Verwendung von Papier gemäß Anspruch 13 bereit. Bevorzugte Ausführungsformen sind in den abhängigen Ansprüchen angegeben.

Nach einem ersten Aspekt stellt die Erfindung eine Schutzhülle für einen Datenträger mit einer Transpondereinheit bereit, die ausgestaltet ist, die Transpondereinheit wenigstens teilweise z.B. gegen ein elektromagnetisches Feld abzuschirmen, umfassend: einen ersten Schutzflächenabschnitt, der vorgesehen ist, wenigstens einen Teil einer ersten Seite des Datenträgers abzudecken, einen zweiten Schutzflächenabschnitt, der mit dem ersten Schutzflächenabschnitt verbindbar oder verbunden ist und vorgesehen ist, wenigstens einen Teil einer zweiten Seite des Datenträgers abzudecken, wobei der erste Schutzflächenabschnitt und der zweite Schutzflächenabschnitt in einem Briefbogen bereitgestellt sind, der ein elektrisch oder magnetisch leitfähiges Material enthält.

Nach einem zweiten Aspekt stellt die Erfindung eine Schutzhülle für einen Datenträger mit einer Transpondereinheit bereit, die ausgestaltet ist, die Transpondereinheit wenigstens teilweise z.B. gegen ein elektromagnetisches Feld abzuschirmen, umfassend: einen ersten Schutzflächenabschnitt, der vorgesehen ist, wenigstens einen Teil einer ersten Seite des Datenträgers abzudecken, einen zweiten Schutzflächenabschnitt, der mit dem ersten Schutzflächenabschnitt verbindbar oder verbunden ist und vorgesehen ist, wenigstens einen Teil einer zweiten Seite des Datenträgers abzudecken, wobei der erste Schutzflächenabschnitt und der zweite Schutzflächenabschnitt in einem Briefumschlag bereitgestellt sind, der ein elektrisch oder magnetisch leitfähiges Material enthält.

Nach einem dritten Aspekt stellt die Erfindung eine Verwendung von Papier, das ein elektrisch oder magnetisch leitfähiges Material enthält, für einen Briefbogen bereit, auf dem ein Datenträger aufbringbar ist, wobei zumindest ein Teil des Briefbogens ausgestaltet, durch bestimmungsgemäßes Falten des Briefbogens einen elektrisch oder magnetisch abschirmenden Bereich für eine Transpondereinheit des Datenträgers zu bilden.

In einem Ausführungsbeispiel sind der Briefbogen bzw. der Briefumschlag, der erste Schutzflächenabschnitt und der zweite Schutzflächenabschnitt integral ausgebildet.

In einem weiteren Ausführungsbeispiel ist zwischen dem ersten Schutzflächenabschnitt und dem zweiten Schutzflächenabschnitt ein Falz vorgesehen.

In einem anderen Ausführungsbeispiel ist wenigstens ein Fixierabschnitt mit dem ersten oder dem zweiten Schutzflächenabschnitt verbunden und trägt ein Befestigungsmittel zur Befestigung an dem jeweils anderen Schutzflächenabschnitt.

In einem weiteren Ausführungsbeispiel ist zwischen dem wenigstens einen Fixierabschnitt und dem ersten oder dem zweiten Schutzflächenabschnitt wenigstens ein Falz vorgesehen.

In einem weiteren Ausführungsbeispiel sind der erste Schutzflächenabschnitt und der zweite Schutzflächenabschnitt abtrennbar mit dem Briefbogen verbunden.

In einem besonderen Ausführungsbeispiel wird die Abtrennung durch eine Solltrennstelle, insbesondere eine Perforation und/oder eine Materialverdünnung erreicht.

In einem weiteren Ausführungsbeispiel bildet das elektrisch leitfähige Material eine Schicht, eine Mehrzahl von Leitungsdrähten und/oder ein Drahtnetz.

In einem Ausführungsbeispiel der Schutzhülle im Briefumschlag ist der erste oder der zweite Schutzflächenabschnitt in einem vorderen Umschlagblatt des Briefumschlags angeordnet und der jeweils andere Schutzflächenabschnitt ist in einem hinteren Umschlagblatt des Briefumschlags angeordnet.

In einem besonderen Ausführungsbeispiel der Schutzhülle im Briefumschlag verläuft der wenigstens eine Falz zwischen dem ersten und dem zweiten Schutzflächenabschnitt wenigstens teilweise entlang wenigstens eines Falzes des Briefumschlags.

Nach einem vierten Aspekt stellt die Erfindung ein Verfahren zur Herstellung einer Schutzhülle für einen Datenträger mit einer Transpondereinheit bereit, umfassend

Bereitstellen eines Briefbogens, der ein elektrisch oder magnetisch leitfähiges Material enthält, und Anordnen einer Solltrennstelle im Briefbogen entlang von Außenkanten eines vorgesehenen ersten Schutzflächenabschnitts und eines vorgesehenen zweiten Schutzflächenabschnitts der Schutzhülle.

Nach einem fünften Aspekt stellt die Erfindung Verfahren zur Herstellung einer Schutzhülle für einen Datenträger mit einer Transpondereinheit bereit, umfassend Bereitstellen eines Briefumschlags, der ein elektrisch oder magnetisch leitfähiges Material enthält, und Anordnen einer Solltrennstelle im Briefumschlag entlang von Außenkanten eines vorgesehenen ersten Schutzflächenabschnitts und eines vorgesehenen zweiten Schutzflächenabschnitts der Schutzhülle.

In einem Ausführungsbeispiel wird wenigstens ein Falz zwischen dem ersten Schutzflächenabschnitt und dem zweiten Schutzflächenabschnitt angelegt.

In einem weiteren Ausführungsbeispiel wird die Solltrennstelle zusätzlich entlang einer Außenkante wenigstens eines vorgesehenen Fixierabschnitts angeordnet, der ein Befestigungsmittel zur Befestigung des ersten Schutzflächenabschnitts am zweiten Schutzflächenabschnitt trägt.

In einem anderen Ausführungsbeispiel wird wenigstens ein Falz zwischen einem der Schutzflächenabschnitte und dem wenigstens einen Fixierabschnitt angelegt.

In einem weiteren Ausführungsbeispiel wird die Solltrennstelle durch Perforieren und/oder Materialverdünnen angeordnet.

In einem weiteren Ausführungsbeispiel wird der erste oder der zweite Schutzflächenabschnitt in einem vorderen Umschlagblatt des Briefumschlags angeordnet und der jeweils andere Schutzflächenabschnitt wird in einem hinteren Umschlagblatt des Briefumschlags angeordnet.

In einem ändern Ausführungsbeispiel wird der wenigstens eine Falz zwischen dem ersten und dem zweiten Schutzflächenabschnitt wenigstens teilweise entlang wenigstens eines Falzes des Briefumschlags angelegt.

Weitere Aspekte und Merkmale der Erfindung ergeben sich aus den abhängigen Ansprüchen, der nachfolgenden Beschreibung bevorzugter Ausführungsbeispiele und der beigefügten Zeichnung.

### Kurzbeschreibung der Zeichnung

Weitere Ausführungsbeispiele der Erfindung werden nun anhand und unter Bezugnahme auf die angefügten Figuren beschrieben, von denen zeigen schematisch:
Fig. 1 ein Ausführungsbeispiel eines Briefbogens mit einer integrierten Schutzhülle;
Fig. 2 ein Ausführungsbeispiel einer Schutzhülle in ihrer bestimmungsgemäßen Form;
Fig. 3 ein Ausführungsbeispiel eines Briefumschlags vor einem Falten und Verkleben mit einer integrierten Schutzhülle; und
Fig. 4 ein weiteres Ausführungsbeispiel eines Briefumschlags vor einem Falten und Verkleben mit einer integrierten Schutzhülle.

Die Zeichnungen sind nicht unbedingt maßstabsgetreu. Einige Teile sind nur schematisch dargestellt, Beachtung fand das Prinzip der Erfindung.

### Beschreibung der bevorzugten Ausführungsbeispiele

Die nachfolgenden Ausführungsbeispiele beziehen sich auf unterschiedliche Schutzmaßnahmen für eine Chipkarte mit RFID-Transpondereinheit, die ein Auslesen der Chipkarte auf dem Postweg zum Endnutzer sowie bei der späteren Verwendung der Chipkarte verhindern sollen. Nach einigen Ausführungsbeispielen wird einem Endnutzer eine Schutzhülle als "Bausatz" bereitgestellt, beispielsweise als Teil eines Briefbogens oder Briefumschlags, der vom Endnutzer mit wenigen Handgriffen in die bestimmungsgemäße Form gebracht werden kann. Auch wenn die nachfolgenden Ausführungsbeispiele auf eine Chipkarte mit RFID-Transpondereinheit bezogen sind, ist die Lehre der Erfindung keinesfalls darauf beschränkt. Sie lässt genauso auf andere Datenträger mit Transpondereinheit wie z.B. Geldkarte, Kreditkarte, Personalausweis, Reisepass mit Datapageeinlage, Gesundheitskarte, Eintrittskarte, etc. übertragen.

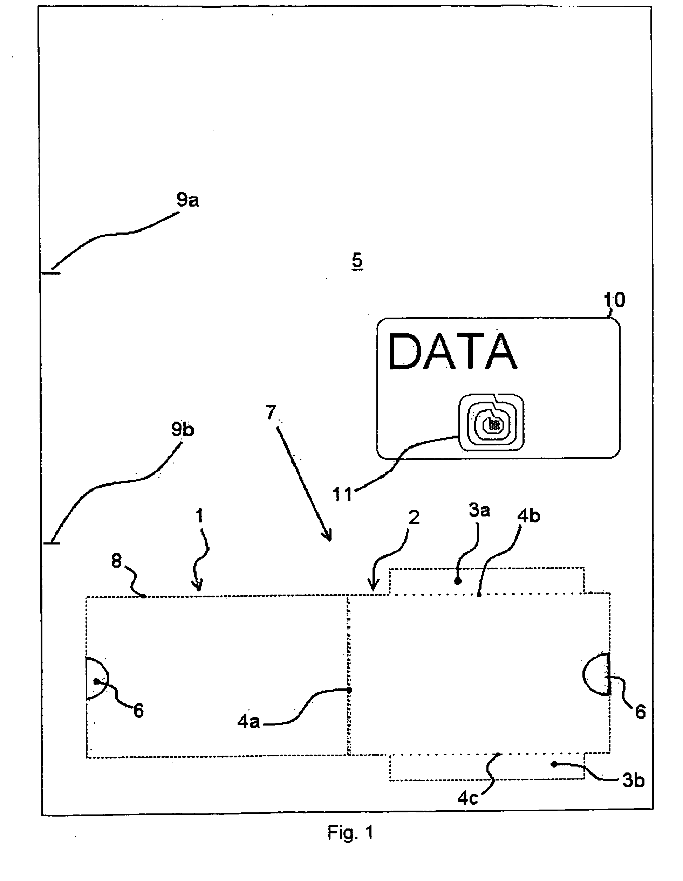

Fig. 1 zeigt in einem ersten Ausführungsbeispiel eine Schutzhülle 7 für eine Chipkarte mit Transpondereinheit, z.B. einem RFID-Transponder, die als Zwischenprodukt in einem Briefbogen 5 bereitgestellt ist. Das Material des Briefbogens 5 enthält eine elektrisch oder magnetisch leitfähige Schicht, z.B. eine metallische Beschichtung oder Zwischenschicht, mehrere Leitungsdrähte oder auch ein Netz aus solchen Leitungsdrähten. Der Aufbau eines RFID-Transponders bzw. RFID-Chips umfasst prinzipiell eine Antenne, einen analogen Schaltkreis zum Empfangen und Senden, sowie einen digitalen Schaltkreis und einen permanenten Speicherbaustein. Das vorgenannte Material des Briefbogens bewirkt die effektive Unterdrückung (Abschirmung) von elektromagnetischen Wellen, die zum Betrieb des RFID-Transponders sowie zum Übertragen der Information an ein Lesegerät notwendig sind. Dies geschieht beispielsweise durch eine Reflexion der elektromagnetischen Felder an einer magnetischen Schicht oder durch einen weiteren Zusatz, welcher die Oszillation der Schwingkreise des RFID-Transponders be- bzw. verhindert.

Die in Fig. 1 dargestellte Schutzhülle 7 umfasst einen ersten Schutzflächenabschnitt 1 und einen zweiten Schutzflächenabschnitt 2, die mit dem Briefbogen 5 integral ausgebildet sind. Der erste und der zweite Schutzflächenabschnitt 1, 2 sind rechteckig, weisen etwa die gleiche Höhe und Breite auf und sind jeweils etwas höher und breiter als übliche Chipkarten. In einem Ausführungsbeispiel sind der erste und der zweite Schutzflächenabschnitt 1, 2 jeweils an einer schmalen Kante etwa 5,5cm bis 6,5cm hoch und an einer breiten Kante etwa 8cm bis 9cm breit. Der erste und der zweite Schutzflächenabschnitt 1, 2 grenzen an jeweils einer Kante gleicher Länge aneinander. Im dargestellten Ausführungsbeispiel grenzen sie an einer schmalen Kante aneinander. Entlang der Grenzlinie ist ein Falz 4a vorgesehen.

Die Schutzhülle 7 umfasst außerdem Fixierabschnitte 3a, 3b, die an zwei weiteren Kanten des zweiten Schutzflächenabschnitts 2 angeordnet sind und ebenfalls integral mit dem Briefbogen 5 ausgebildet sind. Zwischen dem zweiten Schutzflächenabschnitt 2 und dem jeweiligen Fixierabschnitt 3a, 3b ist jeweils ein Falz 4b, 4c vorgesehen. In einem Ausführungsbeispiel weisen die vorgesehenen Falze 4a, 4b, 4c eine Perforation oder Materialverdünnung auf, so dass ein Anwender die Falze leicht umschlagen kann. In einem anderen Ausführungsbeispiel ist die Anordnung der Falze aufgedruckt, so dass der Anwender ihre Anordnung zur Kenntnis nehmen und die Fixierabschnitte 3a, 3b entsprechend umschlagen kann.

Auf den Fixierabschnitten 3a, 3b ist jeweils ein Befestigungsmittel (nicht dargestellt) angeordnet, beispielsweise ein Klebstoff, ein Etikett, oder eine Gummierung. Sofern das Befestigungsmittel selbstklebend ist, ist es mit einer Abziehfolie (nicht dargestellt) bedeckt, so dass der Briefbogen 5 nicht ungewollt an sich selbst oder an einem Briefumschlag haftet.

Die Schutzflächenabschnitte 1, 2 weisen an jeweils einer Kante Aussparungen 6 auf. Die Aussparungen 6 erleichtern zunächst ein Heraustrennen der Schutzhülle 7 aus dem Briefbogen 5. Bei der späteren Anwendung erleichtern sie dem Endnutzer außerdem die Entnahme der Chipkarte aus der Schutzhülle. Die Aussparungen 6 sind so angeordnet, dass sie in der bestimmungsgemäßen Form der Schutzhülle 7 etwa deckungsgleich übereinander liegen. Eine Solltrennstelle 8 umgibt die Schutzflächenabschnitte 1, 2 und die Fixierabschnitte 3a, 3b entlang ihrer Außenkanten. In einem anderen Ausführungsbeispiel könnten die Aussparungen 6 aber auch erst dann in der Schutzhülle 7 verwirklicht sein, wenn die Schutzhülle 7 aus dem Briefbogen 5 herausgetrennt ist. Für diese Ausführungsvariante ist der Bereich der Aussparungen 6 im Briefbogen 5 ebenfalls von der Solltrennstelle 8 umgeben bzw. die Solltrennstelle 8 verläuft in diesem Bereich entlang der Grenze des Bereichs der Aussparungen 6 zu den Schutzflächenabschnitten 1, 2.

Nach einem ersten Ausführungsbeispiel ist die Solltrennstelle 8 als Perforation ausgeführt. In einem anderen Ausführungsbeispiel ist die Solltrennstelle 8 als Materialverdünnung ausgeführt. In einem weiteren einfacheren Ausführungsbeispiel ist die Solltrennstelle 8 auf den Briefbogen 5 aufgedruckt, so dass ein Anwender die Schutzhülle 7 aus dem Briefbogen 5 ausschneiden kann.

In Fig. 1 ist des weiteren eine Chipkarte 10 mit einer Transpondereinheit 11 zum Versand auf dem Briefbogen 5 angeordnet dargestellt. In diesem Ausführungsbeispiel ist die Chipkarte 10 außerhalb des Bereiches der Schutzhülle 7 positioniert, und zwar im mittleren Drittel des Briefbogens oberhalb der Schutzflächenabschnitte 1, 2 auf dem Briefbogen 5 z.B. mit einem Haftkleber oder Haftetikett in bekannter Weise aufgeklebt. Diese Positionierung hat gegenüber einer Positionierung der Karte im Bereich der Schutzflächenabschnitte 1, 2 den Vorteil, dass ein für Befestigung der Chipkarte 10 verwendeter Klebstoff nicht auf einer der Schutzflächenabschnitte 1, 2 zurück bleibt und später eine Auf- und Entnahme der Chipkarte 10 in die bzw. aus der Schutzhülle stört. Nach einer weiteren Variante wird die Chipkarte 10 auf dem Briefbogen 5 mit einem sehr viskosen Klebstoff befestigt, der sich sowohl von der Chipkarte 10 als auch vom Briefbogen 5 rückstandslos lösen lässt. In diesem Fall kann die Chipkarte 10 auch auf einem der Schutzflächenabschnitte 1, 2 der späteren Schutzhülle angeordnet werden.

In einem weiteren Ausführungsbeispiel ist die Chipkarte 10 auf einem der Fixierabschnitte 3a, 3b angeordnet und ersetzt die Abziehfolie für ein selbstklebendes Befestigungsmittel, das sich auf diesem Fixierabschnitt befindet.

In einem weiteren (nicht gezeigten) Ausführungsbeispiel sind die Positionen der Chipkarte 10 und der Schutzhülle 7 auf dem Briefbogen 5 gegenüber dem Ausführungsbeispiel der Fig. 1 vertauscht, d.h. die Chipkarte 10 ist im unteren Drittel und die Schutzhülle 7 im mittleren Drittel des Briefbogens positioniert.

Zur Herstellung des Briefbogens 5 samt Schutzhülle 7 wird der Briefbogen 5 entlang von Außenkanten der Schutzflächenabschnitte 1, 2 und der Fixierabschnitte 3a, 3b mit der Solltrennstelle 8 versehen. Dazu wird der Briefbogen 5 in einem Ausführungsbeispiel entlang der Solltrennstelle 8 perforiert. In einem anderen Ausführungsbeispiel wird an der Solltrennstelle 8 Material abgetragen. Zusätzlich werden die Ränder der Aussparungen 6 gestanzt oder perforiert. In einem weiteren Ausführungsbeispiel wird der Briefbogen 5 bei seiner Herstellung entlang der Solltrennstelle 8 dünner ausgeführt. In einem weiteren Schritt wird zwischen den Schutzflächenabschnitten 1, 2 und zwischen dem zweiten Schutzflächenabschnitt 2 und den Fixierabschnitten 3a, 3b jeweils ein Falz 4a, 4b, 4c angelegt. In einem Ausführungsbeispiel wird der Briefbogen 5 dazu entlang der Falze 4a, 4b, 4c perforiert, unter Umständen mit Lochabständen, die größer als die Lochabstände entlang der Solltrennstelle 8 sind. In einem anderen Ausführungsbeispiel werden die Falze 4a, 4b, 4c geprägt oder es wird entlang der Falze 4a, 4b, 4c Material verdünnt. Bevorzugt sind die Falze 4a, 4b, 4c so angelegt, dass sie beim Heraustrennen der Schutzhülle 7 nicht einreißen. Dazu kann beispielsweise nur ein mittlerer Bereich der Falze 4a, 4b, 4c nach einer der vorgenannten Arten angelegt werden, während die Randbereiche der Falze 4a, 4b, 4c unbearbeitet bleiben. In einem weiteren Ausführungsbeispiel werden die Falze 4a, 4b, 4c, die Aussparungen 6 und/oder die Solltrennstelle aufgedruckt, so dass der Anwender die Schutzhülle 7 ausschneiden und entlang der Falze 4a, 4b, 4c umschlagen kann.

Der Briefbogen 5 mit der integrierten Schutzhülle 7 hat die Funktion, Daten auf der Chipkarte 10 bzw. ihrer Transpondereinheit 11 auf zwei Arten zu schützen:
Zum Versand der Chipkarte 10 per Post wird die Chipkarte 10 wie vorstehend beschrieben auf dem Briefbogen 5 befestigt. Der Briefbogen wird etwa auf Höhe einer ersten Markierung 9a und einer zweiten Markierung 9b jeweils einmal und etwa parallel zur oberen bzw. unteren Kante des Briefbogens 5 gefaltet. Die Chipkarte 10, die sich auf einer Vorder- oder Rückseite des Briefbogens 5 befindet, kommt dabei in eine Position zwischen zwei Abschnitte des Briefbogens 5. Da der Briefbogen 5 z.B. ein elektrisch oder magnetisch leitfähiges Material oder ein Leitungsnetz enthält, bildet der Briefbogen 5 um die Chipkarte 10 eine Abschirmung nach dem Prinzip eines Faradayschen Käfigs, in dem ein äußeres oder inneres elektrisches Feld gedämpft ist. Auch kann die leitfähige Schicht eine Sende- oder Empfangsfrequenz der Schwingkreise der Transpondereinheit 11 verstimmen, so dass die Transpondereinheit 11 nicht mehr auf ein Lesegerät abgestimmt ist. Somit ist die Transpondereinheit 11 während des Versands nicht auslesbar und ihr gespeicherter Inhalt vor unberechtigtem Zugriff geschützt.
Die Chipkarte 10 ist erst wieder auslesbar, wenn sie vom Briefbogen 5 entfernt wird bzw. wenn der Briefbogen 5 entfaltet wird. Da Geschäftsbriefe üblicherweise Z-förmig gefaltet werden, wird die Chipkarte 10 im dargestellten Ausführungsbeispiel für den Versand auf einem mittleren Abschnitt zwischen der ersten Markierung 9a und der zweiten Markierung 9b befestigt, da sich der mittlere Abschnitt bei Z-förmiger Faltung immer zwischen zwei äußeren Abschnitten des Briefbogens 5 befindet, unabhängig davon, ob die Chipkarte 10 auf der Vorder- oder Rückseite des Briefbogens 5 angeordnet ist. In einem anderen Ausführungsbeispiel ist die Chipkarte 10, wie bereits oben erwähnt, auf dem unteren Drittel des Briefbogens 5 angeordnet, so dass im mittleren Abschnitt ausreichend Platz für einen Brieftext zur Verfügung steht. Da die Schutzflächenabschnitte 1, 2 der Schutzhülle integral mit dem Briefbogen 5 ausgebildet sind, kann der Brieftext auch im Bereich der Schutzflächenabschnitte 1, 2 gedruckt werden.

Nach dem Erhalt der Chipkarte 10 beim Anwender kann der Anwender die Chipkarte 10 entnehmen, die Schutzhülle 7 z.B. an den Perforationen aus dem Briefbogen 5 abtrennen und sie in die bestimmungsgemäße Form bringen. In der Schutzhülle 7 kann der Anwender seine Chipkarte 10 dauerhaft aufbewahren und mit sich führen, ohne dass die Chipkarte 10 von unberechtigten ausgelesen werden kann.

Um die im Ausführungsbeispiel der Fig. 1 zeigte im Briefbogen 5 integrierte Schutzhülle 7 in die bestimmungsgemäße Endform zu bringen, löst der Anwender zunächst den ersten und zweiten Schutzflächenabschnitt 1, 2 und die Fixierabschnitte 3a, 3b entlang der Solltrennstelle 8 aus dem Briefbogen 5. In einem nächsten Schritt schlägt der Anwender den ersten Schutzflächenabschnitt 1 und die Fixierabschnitte 3a, 3b entlang der vorgesehenen Falze 4a, 4b, 4c um, so dass der erste und der zweite Schutzflächenabschnitt 1, 2 etwa übereinanderliegen und die Fixierabschnitte 3a, 3b auf einem der Schutzflächenabschnitte 1, 2 aufliegen. In einem weiteren Schritt aktiviert der Anwender das Befestigungsmittel indem er entweder die Abziehfolie von den Fixierabschnitten 3a, 3b entfernt oder die Gummierung befeuchtet und befestigt die Fixierabschnitte 3a, 3b an dem ersten Schutzflächenabschnitt 1. Je nach Reihenfolge der Schritte und Vorgehensweise ergeben sich beispielsweise zwei unterschiedliche Anordnungen. Für die eine Anordnung schlägt der Anwender zunächst die Fixierabschnitte 3a, 3b entlang der vorgesehenen Falze 4b, 4c so um, dass die Fixierabschnitte 3a, 3b auf dem zweiten Schutzflächenabschnitt 2 aufliegen, wobei das Befestigungsmittel auf der Seite der Fixierabschnitte 3a, 3b angeordnet ist, die dem zweiten Schutzflächenabschnitt 2 nach dem Umschlagen abgewandt ist. Danach aktiviert der Anwender das Befestigungsmittel und schlägt den ersten Schutzflächenabschnitt 1 so um, dass er auf den Fixierabschnitten 3a, 3b aufliegt und mit dem Befestigungsmittel in Kontakt kommt. Für die andere Anordnung schlägt der Anwender erst den ersten Schutzflächenabschnitt 1 auf die Seite des zweiten Schutzflächenabschnitts 2 um, auf der sich auch das Befestigungsmittel der benachbarten Fixierabschnitte 3a, 3b befindet. Danach wird das Befestigungsmittel aktiviert und die Fixierabschnitte werden um den ersten Schutzflächenabschnitt 1 geschlagen.

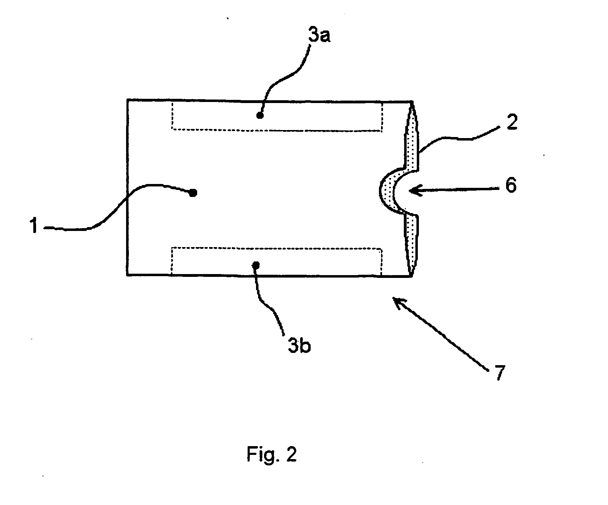

Fig. 2 zeigt schematisch die auf vorstehende Weise erhaltene Schutzhülle 7. Die Schutzhülle 7 ist rechteckig und bietet der Chipkarte 10 zwischen dem ersten Schutzflächenabschnitt 1 und dem zweiten Schutzflächenabschnitt 2 wieder einen Raum, in dem die Transpondereinheit 11 nicht ausgelesen werden kann. Der erste Schutzflächenabschnitt 1 verdeckt in Fig. 2 die Fixierabschnitte 3a, 3b, die durch gestrichelte Linien angedeutet sind. Die Schutzhülle 7 ist an drei Seiten geschlossen und nur an einer schmalen Seite offen. Dadurch verbleibt die Chipkarte 10 in der Schutzhülle 7 solange die Schutzhülle 7 nicht mit der offenen Seite nach unten hochgehalten wird. Durch die Öffnung an der schmalen Seite kann der Anwender die Chipkarte 10 jederzeit entnehmen, wobei die Aussparungen 6 die Entnahme erleichtern.

In einem anderen Ausführungsbeispiel weist die Schutzhülle 7 nur einen Fixierabschnitt 3a auf und die Schutzhülle 7 ist nur an zwei benachbarten Seiten geschlossen. Dieses Ausführungsbeispiel eignet sich besonders, wenn die Chipkarte 10 mit der Schutzhülle 7 in einem Kartenfach eines Geldbeutels oder einer Brieftasche untergebracht werden soll, da so unabhängig von einer Öffnung an der breiten oder schmalen Seite des Kartenfaches auf die Chipkarte 10 zugegriffen werden kann, ohne dem Kartenfach die Schutzhülle 7 entnehmen zu müssen.

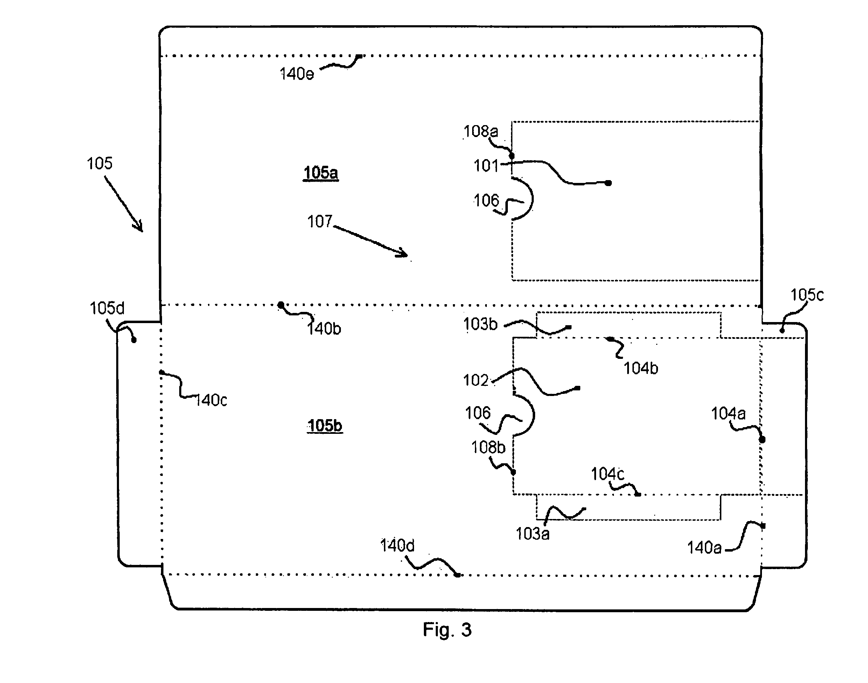

Fig. 3 zeigt ein weiteres Ausführungsbeispiel einer Schutzhülle 107 als integraler Bestandteil eines Briefumschlags 105. Der Briefumschlag 105 ist zur Veranschaulichung ungefaltet und unverklebt dargestellt. Zur Fertigstellung wird der Briefumschlag entlang vorgesehener Umschlagfalze 140a, 140b, 140c gefaltet und seitliche Laschen 105c, 105d, die an gegenüberliegenden seitlichen Kanten eines hinteren Umschlagblattes 105b des Briefumschlags angeordnet sind und mit dem hinteren Umschlagblatt 105b verbunden sind, werden mit einem vorderen Umschlagblatt 105a des Briefumschlags 105 verklebt, so dass nur ein Öffnungsschlitz bleibt, durch den ein Brief eingefügt werden kann. Verschlussfalze 140d, 140e dienen einem Verschluss des Briefumschlags 105 nachdem ein Brief eingefügt wurde. Das Material des Briefumschlags 105 enthält eine elektrisch oder magnetisch leitfähige Schicht, z.B. eine metallische Beschichtung, mehrere Leitungsdrähte oder auch ein Netz aus solchen Leitungsdrähten. Die Schutzhülle 107 umfasst einen ersten Schutzflächenabschnitt 101 und einen zweiten Schutzflächenabschnitt 102, die mit dem Briefumschlag 105 integral ausgebildet sind. Der erste Schutzflächenabschnitt 101 ist im vorderen Umschlagblatt 105a angeordnet und grenzt an eine seitliche rechte Aussenkante. Der zweite Schutzflächenabschnitt 102 ist im hinteren Umschlagblatt 105b angeordnet und grenzt dort an die seitliche Lasche 105c. Der erste und der zweite Schutzflächenabschnitt 101, 102 sind rechteckig, weisen etwa die gleiche Höhe und Breite auf und sind jeweils etwas höher und breiter als übliche Chipkarten. In einem Ausführungsbeispiel sind der erste und der zweite Schutzflächenabschnitt 101, 102 jeweils etwa 5,5cm bis 6,5cm hoch und etwa 8cm bis 9cm breit. Der erste und der zweite Schutzflächenabschnitt 101, 102 weisen Aussparungen 106 auf. Bevor der Briefumschlag 105 verklebt wird, ist der erste Schutzflächenabschnitt 101 getrennt vom zweiten Schutzflächenabschnitt 102 angeordnet.

Nach dem Verkleben des Briefumschlags 105 ist die seitliche Lasche 105c mit dem vorderen Umschlagblatt 105a und einem Teil des ersten Schutzflächenabschnitts 101 verklebt. Beim späteren Herauslösen der Schutzhülle 107 wird ein Teil der Lasche 105c mit herausgelöst und bildet einen Teil des ersten Schutzflächenabschnitts 101. Der erste Schutzflächenabschnitt 101 grenzt also an der seitlichen Kante des verklebten Briefumschlags 105 unmittelbar an den zweiten Schutzflächenabschnitt 102. Darüber hinaus liegen der erste und der zweite Schutzflächenabschnitt 101, 102 nach dem Verkleben übereinander. Ebenso sind nun Aussparungen 106 in den Schutzflächenabschnitten 101, 102 übereinander angeordnet. Zwischen dem ersten und dem zweiten Schutzflächenabschnitt 101, 102 ist ein Falz 104a. Der Falz 104a verläuft entlang des Umschlagfalzes 140a zwischen dem hinteren Umschlagblatt 105b und der seitlichen Lasche 105c bzw. zwischen dem hinteren Umschlagblatt 105b und dem vorderen Umschlagblatt 105a, mit dem die seitliche Lasche 105c verklebt ist.

Die Schutzhülle 107 umfasst außerdem Fixierabschnitte 103a, 103b, die an zwei Kanten des zweiten Schutzflächenabschnitts 102 angeordnet sind und ebenfalls integral mit dem Briefumschlag 105 ausgebildet sind. Auf den Fixierabschnitten 103a, 103b ist jeweils ein Befestigungsmittel (nicht dargestellt) angeordnet, beispielsweise ein Klebstoff, Etikett oder eine Gummierung. Sofern das Befestigungsmittel selbstklebend ist, ist es mit einer Abziehfolie (nicht dargestellt) bedeckt, so dass der Briefumschlag 105 nicht ungewollt an sich selbst oder an seiner Umgebung haften bleibt. Das Befestigungsmittel ist auf den Fixierabschnitten 103a, 103b bevorzugt so angeordnet, dass es nach dem Verkleben im Inneren des Briefumschlags 105 ist, so dass es beim Versand nicht beschädigt wird oder an anderen Briefumschlägen haftet. Zwischen dem zweiten Schutzflächenabschnitt 102 und dem jeweiligen Fixierabschnitt 103a, 103b ist jeweils ein Falz 104b, 104c vorgesehen.

Solltrennstellen 108a, 108b begrenzen die Schutzflächenabschnitte 101, 102 und die Fixierabschnitte 103a, 103b entlang ihrer Außenkanten zum Briefumschlag 105. In einem Ausführungsbeispiel sind die Solltrennstellen 108a, 108b als Perforation ausgeführt. In einem anderen Ausführungsbeispiel sind die Solltrennstellen 108a, 108b als Materialverdünnung ausgeführt. In einem einfacheren Ausführungsbeispiel sind die Solltrennstellen 108a, 108b auf den Briefumschlag 105 aufgedruckt, so dass ein Anwender die Schutzhülle 107 aus dem Briefbogen 105 ausschneiden kann. Die Solltrennstellen 108a, 108b werden in einem bevorzugten Ausführungsbeispiel ausgeführt, bevor der Briefumschlag gefaltet und verklebt wird.

Der Briefumschlag 105 bildet aufgrund seines Materials in seinem Inneren einen abschirmenden Raum nach Art eines Faradayschen Käfigs, so dass eine Chipkarte wie die Chipkarte 10 samt Transpondereinheit 11 während eines Versands gegen unberechtigtes Auslesen der Transpondereinheit 11 geschützt ist. Auch könnte das Material eine Sende- oder Empfangsfrequenz der Transpondereinheit 11 verstimmen, so dass die Transpondereinheit 11 nicht mehr auf ein Lesegerät abgestimmt ist. Nach dem Erhalt der Chipkarte beim Anwender kann der Anwender die Chipkarte entnehmen, die Schutzhülle 107 aus dem Briefumschlag 105 trennen und sie in die bestimmungsgemäße Form bringen. In der Schutzhülle 107 kann der Anwender seine Chipkarte dauerhaft aufbewahren und mit sich führen, ohne dass die Chipkarte von unberechtigten ausgelesen werden kann. Zum Entnehmen der Chipkarte aus der Schutzhülle 107 kann der Anwender durch die Aussparungen 106 die Chipkarte greifen.

Da.die Schutzhülle 107 nach dem Heraustrennen aus dem Briefumschlag 105 im wesentlichen der Schutzhülle 7 aus dem Briefbogen 5 gleicht, kann sie in gleicher Weise gefaltet und verklebt werden, so dass eine Schutzhülle nach dem Ausführungsbeispiel aus Fig. 2 entsteht.

Sofern der Briefumschlag 105 im Bereich des Öffnungsschlitzes geöffnet wird, bleibt die Verbindung zwischen dem ersten und dem zweiten Schutzflächenabschnitt 101, 102 beim Öffnen vollständig erhalten. In einem Ausführungsbeispiel ist der Briefumschlag 105 außen so gestaltet, dass ihm vor dem Öffnen nicht anzusehen ist, dass er eine Schutzhülle 107 enthält. Wenn einige Anwender Briefumschläge gewohnheitsmäßig an einer seitlichen Kante öffnen, nimmt die Schutzhülle 107 schaden und der Briefumschlag 105 ist in diesem Ausführungsbeispiel mit einer weiteren Schutzhülle (nicht dargestellt) an der gegenüberliegenden seitlichen Kante ausgestaltet, so dass auch nach Beschädigung eine weitere Schutzhülle zur Verfügung steht.

Zur Herstellung des Briefumschlags 105 mit Schutzhülle 107 wird der Briefumschlag 105 vor dem Falten und Verkleben entlang von Außenkanten der Schutzflächenabschnitte 101, 102 und der Fixierabschnitte 103a, 103b mit den Solltrennstellen 108a, 108b versehen. Dazu wird der Briefumschlag 105 in einem Ausführungsbeispiel entlang der Solltrennstellen 108a, 108b perforiert. In einem anderen Ausführungsbeispiel wird an den Solltrennstellen 108a, 108b Material abgetragen. In einem weiteren Ausführungsbeispiel wird der Briefumschlag 105 bei seiner Herstellung entlang der Solltrennstellen 108a, 108b dünner ausgeführt. In einem weiteren Schritt wird zwischen den Schutzflächenabschnitten 101, 102 und zwischen dem zweiten Schutzflächenabschnitt 102 und den Fixierabschnitten 103a, 103b jeweils ein Falz 104a, 104b, 104c angelegt. In einem Ausführungsbeispiel wird der Briefumschlag 105 dazu entlang der Falze 104a, 104b, 104c perforiert, unter Umständen mit Lochabständen, die größer als die Lochabstände entlang der Solltrennstellen 108a, 108b sind. In einem anderen Ausführungsbeispiel werden die Falze 104a, 104b, 104c geprägt oder es wird entlang der Falze 104a, 104b, 104c Material verdünnt. In einem Ausführungsbeispiel werden die Falze 104a, 104b, 104c und/oder die Solltrennstellen 108a, 108b aufgedruckt, so dass der Anwender die Schutzhülle 107 ausschneiden und entlang der Falze 104a, 104b, 104c umschlagen kann.

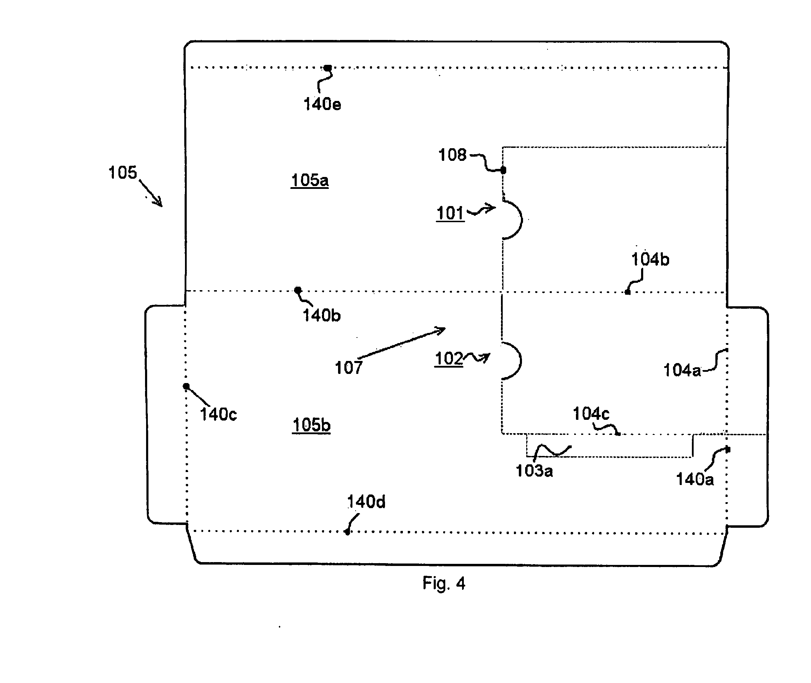

Fig. 4 zeigt ein weiteres Ausführungsbeispiel eines Briefumschlags 105 mit integrierter Schutzhülle 107 in Anlehnung an Fig. 3. In diesem Ausführungsbeispiel grenzen die Schutzflächenabschnitte. 101, 102 aneinander, wobei der vorgesehene Falz 104a auf dem seitlichen Umschlagfalz 140a des Briefumschlags 105 liegt und der zwischen den Schutzflächenabschnitten 101, 102 vorgesehene Falz 104b liegt auf einem vorgesehenen Bodenfalz 140b. Der Bodenfalz 140b ist zwischen dem vorderen und dem hinteren Umschlagblatt 105a, 105b angeordnet. Die Schutzhülle 107 weist in diesem Ausführungsbeispiel nur einen Fixierabschnitt 103a auf, der von dem zweiten Schutzflächenabschnitt 102 durch einen vorgesehenen Falz 104c getrennt ist. Die Schutzhülle 107 wird bezüglich des Briefumschlags 105 durch eine Solltrennstelle 108 begrenzt.

Nach dem Verkleben des Briefumschlags 105 ist der Bodenfalz 140b an einer Kante des Briefumschlags 105 angeordnet, die dem Öffnungsschlitz gegenüber liegt. Der seitliche Umschlagfalz 140a befindet sich nun an der seitlichen Kante. Somit befinden sich der erste und der zweite Schutzflächenabschnitt 101, 102 in einer Ecke des Briefumschlages 105 und sind entlang zweier Kanten unmittelbar miteinander verbunden.

Auch wenn diese Erfindung unter Bezeichnung verschiedener bestimmter Ausführungsbeispiele beschrieben wurde, sind andere Ausführungsformen, die gewöhnlichen Fachmännern mit Blick auf die Veröffentlichung offenkundig sind, auch im Bereich dieser Erfindung. So sind des weiteren Schutzhüllen denkbar, die nur eine Transpondereinheit abdecken, ohne die gesamte Chipkarte aufzunehmen. Entsprechend ist bestimmungsgemäß der Bereich der Erfindung nur durch Bezugnahme auf die angehängten Ansprüche definiert.

## Patentansprüche

1. Briefbogen zur Herstellung einer für einen Datenträger (10) mit einer Transpondereinheit, wobei die Schutzhülle ausgestaltet ist, die Transpondereinheit wenigstens teilweise abzuschirmen, umfassend:
- einen ersten Schutzflächenabschnitt (1), der vorgesehen ist, wenigstens einen Teil einer ersten Seite des Datenträgers (10) abzudecken,
- einen zweiten Schutzflächenabschnitt (2), der mit dem ersten Schutzflächenabschnitt (1) verbindbar oder verbunden ist und vorgesehen ist, wenigstens einen Teil einer zweiten Seite des Datenträgers (10) abzudecken,
wobei der erste Schutzflächenabschnitt (1) und der zweite Schutzflächenabschnitt (2) in dem Briefbogen (5) bereitgestellt sind und der Briefbogen (5) ein elektrisch oder magnetisch leitfähiges Material enthält,
**dadurch gekennzeichnet, dass** der erste Schutzflächenabschnitt (1) und der zweite Schutzflächenabschnitt (2) als Teil des Briefbogens (5) ausgebildet und an diesem zur Bildung der Schutzhülle abtrennbar verbunden sind, wobei zur Abtrennung eine Solltrennstelle in dem Briefbogen (5) vorgesehen ist.

2. Briefbogen nach Anspruch 1, bei welcher zwischen dem ersten Schutzflächenabschnitt (1) und dem zweiten Schutzflächenabschnitt (2) ein Falz (4a) vorgesehen ist.

3. Briefbogen nach einem der vorstehenden Ansprüche, bei welcher wenigstens ein Fixierabschnitt (3a, 3b) mit dem ersten oder dem zweiten Schutzflächenabschnitt (1, 2) verbunden ist und ein Befestigungsmittel zur Befestigung an dem jeweils anderen Schutzflächenabschnitt (2, 1) trägt.

4. Briefbogen nach Anspruch 3, bei welcher zwischen dem wenigstens einen Fixierabschnitt (3a, 3b) und dem ersten oder dem zweiten Schutzflächenabschnitt (1, 2) wenigstens ein Falz (4b, 4c) vorgesehen ist.

5. Briefbogen nach einem der vorstehenden Ansprüche, bei welcher das elektrisch oder magnetisch leitfähige Material eine Schicht, eine Mehrzahl von Leitungsdrähten und/oder ein Drahtnetz bi ldet.

6. Briefunschlag zur Herstellung einer Schutzhülle für einen Datenträger (10) mit einer Transpondereinheit, wobei die Schuthülle ausgestaltet ist, die Transpondereinheit wenigstens teilweise abzuschirmen, umfassend:
- einen ersten Schutzflächenabschnitt (101), der vorgesehen ist, wenigstens einen Teil einer ersten Seite des Datenträgers (10) abzudecken, und
- einen zweiten Schutzflächenabschnitt (102), der mit dem ersten Schutzflächenabschnitt (101) verbindbar oder verbunden ist und vorgesehen ist, wenigstens einen Teil einer zweiten Seite des Datenträgers (10) abzudecken,
wobei der erste Schutzflächenabschnitt (101) und der zweite Schutzflächenabschnitt (102) in dem Briefumschlag (105) bereitgestellt sind und der Briefumschlag (105) ein elektrisch oder magnetisch leitfähiges Material enthält,
**dadurch gekennzeichnet, dass** der erste Schutzflächenabschnitt (101) und der zweite Schutzflächenabschnitt (102) als Teil des Briefumschlags (105) ausgebildet und an diesem zur Bildung der Schutzhülle abtrennbar verbunden sind, wobei zur Abtrennung eine Solltrennstelle in dem Briefumschlag (105) vorgesehen ist.

7. Briefumschlag nach Anspruch 6, bei welcher zwischen dem ersten Schutzflächenabschnitt (101) und dem zweiten Schutzflächenabschnitt (102) wenigstens ein Falz (104a, 104b) vorgesehen ist.

8. Briefumschlag nach Anspruch 6 oder 7, bei welcher wenigstens ein Fixierabschnitt (103a, 103b) mit dem ersten oder dem zweiten Schutzflächenabschnitt (101, 102) verbunden ist und ein Befestigungsmittel zur Befestigung an dem jeweils anderen Schutzflächenabschnitt (102, 101) trägt.

9. Briefumschlag nach Anspruch 8, bei welcher zwischen dem wenigstens einen Fixierabschnitt (103a, 103b) und dem ersten oder dem zweiten Schutzflächenabschnitt (101, 102) wenigstens ein Falz (104b, 104c) vorgesehen ist.

10. Briefunschlag nach einem der Ansprüche 6 bis 9, bei welcher der erste oder der zweite Schutzflächenabschnitt (101, 102) in einem vorderen Umschlagblatt (105a) des Briefumschlags (105) angeordnet ist und der jeweils andere Schutzflächenabschnitt (102, 101) in einem hinteren Umschlagblatt (1 05b) des Briefumschlags (105) angeordnet ist.

11. Briefumschlag nach Anspruch 10, bei welcher der wenigstens eine Falz (104a, 104b) zwischen dem ersten und dem zweiten Schutzflächenabschnitt (101, 102) wenigstens teilweise entlang wenigstens eines Falzes (140a, 140b) des Briefumschlags (105) verläuft.

12. Briefumschlag nach einem der Ansprüche 6 bis 11, bei welcher das elektrisch leitfähige Material eine Beschichtung, eine Mehrzahl von Leitungsdrähten und/oder ein Drahtnetz bildet.

13. Verwendung von Papier, das ein elektrisch oder magnetisch leitfähiges Material enthält, zur Herstellung einer Schutzhülle mittels eines Briefbogens oder eines Breifumschlags nach einem der vorstehenden Ansprüche.

## Claims

1. A sheet of paper for producing a protective cover for a data carrier (10) with a transponder unit, wherein the protective cover is designed in order to screen the transponder unit at least in part, comprising:
- a first protective surface portion (1) which is provided in order to cover at least part of a first side of the data carrier (10),
- a second protective surface portion (2) which is capable of being joined or is joined to the first protective surface portion (1) and is provided in order to cover at least part of a second side of the data carrier (10),
wherein the first protective surface portion (1) and the second protective surface portion (2) are formed in the sheet of paper (5) and the sheet of paper (5) contains an electrically or magnetically conductive material,
**characterized in that** the first protective surface portion (1) and the second protective surface portion (2) are designed as part of the sheet of paper (5) and are joined to the latter in a separable manner in order to form the protective cover, wherein an intended separation point is provided in the sheet of paper (5) for separation purposes.

2. A sheet of paper according to claim 1, in which a fold (4a) is provided between the first protective surface portion (1) and the second protective surface portion (2).

3. A sheet of paper according to one of the preceding claims, in which at least one fixing portion (3a, 3b) is joined to the first or the second protective surface portion (1, 2), and carries a fastening means for fastening to the other respective protective surface portion (2, 1).

4. A sheet of paper according to claim 3, in which at least one fold (4b, 4c) is provided between the at least one fixing portion (3a, 3b) and the first or the second protective surface portion (1, 2).

5. A sheet of paper according to any one of the preceding claims, in which the electrically or magnetically conductive material is a coating, a plurality of conducting wires and/or a wire net.

6. An envelope for producing a protective cover for a data carrier (10) with a transponder unit, wherein the protective cover is designed in order to screen the transponder unit at least in part, comprising:
- a first protective surface portion (101) which is provided in order to cover at least part of a first side of the data carrier (10), and
- a second protective surface portion (102) which is capable of being joined or is joined to the first protective surface portion (101) and is provided in order to cover at least part of a second side of the data carrier (10),
wherein the first protective surface portion (101) and the second protective surface portion (102) are formed in the envelope (105) and the envelope (105) contains an electrically or magnetically conductive material,
**characterized in that** the first protective surface portion (101) and the second protective surface
portion (102) are designed as part of the envelope (105) and are joined to the latter in a separable manner in order to form the protective cover, wherein an intended separation point is provided in the envelope (105) for separation purposes.

7. An envelope according to claim 6, in which at least one fold (104a, 104b) is provided between the first protective surface portion (101) and the second protective surface portion (102).

8. An envelope according to claim 6 or 7, in which at least one fixing portion (103a, 103b) is joined to the first or the second protective surface portion (101, 102), and carries a fastening means for fastening to the other respective protective surface portion (102, 101).

9. An envelope according to claim 8, in which at least one fold (104b, 104c) is provided between the at least one fixing portion (103a, 103b) and the first or the second protective surface portion (101, 102).

10. An envelope according to any one of claims 6 to 9, in which the first or the second protective surface portion (101, 102) is arranged in a forward sheet (105a) of the envelope (105) and the other respective protective surface portion (102, 101) is arranged in a rear sheet (105b) of the envelope (105).

11. An envelope according to claim 10, in which the at least one fold (104a, 104b) extends at least in part along at least one fold (140a, 140b) of the envelope (105) between the first and the second protective surface portion (101, 102).

12. An envelope according to at least one of claims 6 to 11, in which the electrically conductive material is a coating, a plurality of conducting wires and/or a wire net.

13. Use of paper which contains an electrically or magnetically conductive material in order to produce a protective cover by means of a sheet of paper or an envelope according to any one of the preceding claims.

## Revendications

1. Papier à lettres pour la fabrication d'une enveloppe de protection pour un support de données (10) doté d'une unité de transpondeur, ladite enveloppe de protection étant prévue pour blinder au moins partiellement l'unité de transpondeur, comprenant :
- une première partie de surface de protection (1), prévue pour recouvrir au moins une partie d'une première face du support de données (10) ,
- une deuxième partie de surface de protection (2) pouvant être raccordée ou étant raccordée à la première partie de surface de protection (1) et prévue pour recouvrir au moins une partie d'une deuxième face du support de données (10),
la première partie de surface de protection (1) et la deuxième partie de surface de protection (2) étant ménagées dans le papier à lettres (5), et le papier à lettres (5) contenant un matériau électriquement ou magnétiquement conducteur,
**caractérisé en ce que** la première partie de surface de protection (1) et la deuxième partie de surface de protection (2) sont réalisées comme parties du papier à lettres (5) et sont raccordées de manière détachable à celui-ci pour former l'enveloppe de protection, un emplacement de rupture obligée étant prévu sur le papier à lettres (5) pour le détachement.

2. Papier à lettres selon la revendication 1, où un pli (4a) est prévu entre la première partie de surface de protection (1) et la deuxième partie de surface de protection (2).

3. Papier à lettres selon l'une des revendications précédentes, où au moins une partie de fixation (3a, 3b) est raccordée à la première ou à la deuxième partie de surface de protection (1, 2), et supporte un moyen de fixation pour la fixation à l'autre partie de surface de protection (2, 1) correspondante.

4. Papier à lettres selon la revendication 3, où au moins un pli (4b, 4c) est prévu entre la au moins une partie de fixation (3a, 3b) et la première ou la deuxième partie de surface de protection (1, 2).

5. Papier à lettres selon l'une des revendications précédentes, où le matériau électriquement ou magnétiquement conducteur forme une couche, une pluralité de fils conducteurs et/ou un réseau de fils.

6. Enveloppe de lettre pour la fabrication d'une enveloppe de protection pour un support de données (10) doté d'une unité de transpondeur, ladite enveloppe de protection étant prévue pour blinder au moins partiellement l'unité de transpondeur, comprenant :
- une première partie de surface de protection (101), prévue pour recouvrir au moins une partie d'une première face du support de données (10), et
- une deuxième partie de surface de protection (102) pouvant être raccordée ou étant raccordée à la première partie de surface de protection (101) et prévue pour recouvrir au moins une partie d'une deuxième face du support de données (10),
la première partie de surface de protection (101) et la deuxième partie de surface de protection (102) étant ménagées dans l'enveloppe de lettre (105), et l'enveloppe de lettre (105) contenant un matériau électriquement ou magnétiquement conducteur,
**caractérisée en ce que** la première partie de surface de protection (101) et la deuxième partie de surface de protection (102) sont réalisées comme parties de l'enveloppe de lettre (105) et sont raccordées de manière détachable à celle-ci pour former l'enveloppe de protection, un emplacement de rupture obligée étant prévu sur l'enveloppe de lettre (105) pour le détachement.

7. Enveloppe de lettre selon la revendication 6, où au moins un pli (104a, 104b) est prévu entre la première partie de surface de protection (101) et la deuxième partie de surface de protection (102).

8. Enveloppe de lettre selon la revendication 6 ou la revendication 7, où au moins une partie de fixation (103a, 103b) est raccordée à la première ou à la deuxième partie de surface de protection (101, 102), et supporte un moyen de
fixation pour la fixation à l'autre partie de surface de protection (102, 101) correspondante.

9. Enveloppe de lettre selon la revendication 8, où au moins un pli (104b, 104c) est prévu entre au moins une partie de fixation (103a, 103b) et la première ou la deuxième partie de surface de protection (101, 102).

10. Enveloppe de lettre selon l'une des revendications 6 à 9, où la première ou la deuxième partie de surface de protection (101, 102) est disposée sur un rabat avant (105a) de l'enveloppe de lettre (105) et où l'autre partie de surface de protection (102, 101) correspondante est disposée sur un rabat arrière (105b) de l'enveloppe de lettre (105).

11. Enveloppe de lettre selon la revendication 10, où le au moins un pli (104a, 104b) entre la première et la deuxième partie de surface de protection (101, 102) s'étendent au moins partiellement le long d'au moins un pli (140a, 140b) de l'enveloppe de lettre (105).

12. Enveloppe de lettre selon l'une des revendications 6 à 11, où le matériau électriquement conducteur forme une couche, une pluralité de fils conducteurs et/ou un réseau de fils.

13. Utilisation de papier contenant un matériau électriquement ou magnétiquement conducteur pour la fabrication d'une enveloppe de protection au moyen d'un papier à lettres ou d'une enveloppe de lettre selon l'une des revendications précédentes.
